# EUROPEAN PATENT APPLICATION

(11) **EP 0 874 092 A2**
(43) Date of publication of application: **28.10.1998**
(21) Application number: 98107266.3
(22) Date of filing: 21.04.1998
(51) Int. Cl.: E03D 1/00, F16K 31/26

(54) **Float valve, with adjustable closing force, for feeding water into a lavatory flush tank**

(30) Priority: 22.04.1997 IT TO970345
(71) Applicant: VALSIR S.p.A., 25078 Vestone (BS) (IT)
(72) Inventor: Fauciglietti, Renzo, 22063 Cantu' (IT)
(74) Representative: Cerbaro, Elena

(57) **Abstract**

A float valve (2) having a valve body (3) defining internally a conduit (8) having a first end (8a) connected to the water mains, and a second on-off end (8b) normally closed by an axially-movable plug element (22); a float (27) movable vertically according to the water level in the tank (1); and a lever control mechanism (26) interposed between the float (27) and the plug element (22) to move the plug element to and from the on-off end of the conduit (8) as the float moves between a first and a second limit position. The lever mechanism (26) has a first and a second lever (67, 70) connected in angularly-adjustable manner to each other to adjust the closing force exerted by the levers (67, 70) on the plug element (22) and by the plug element on the on-off end (8b) of the conduit (8) according to the existing pressure.

## Description

The present invention relates to a float valve, with adjustable closing force, for feeding water into a lavatory flush tank.

As is known, a lavatory flush tank houses a float-controlled water supply device or so-called float valve connected to the water mains; a discharge device for discharging water into the lavatory; and a control device operated externally by means of a pushbutton to control the discharge device.

The float valve comprises an elongated tubular body defining internally a conduit for receiving water from the mains at a first end, and which is normally closed at a second end by a plug element integral with an axially-movable slide. The slide is in turn controlled by a lever mechanism connected to a float, which determines the axial position of the slide, and therefore of the plug element, according to the water level in the tank. That is, as long as the water in the tank is below a predetermined level, the plug element leaves the end of the conduit open to allow water to flow from the mains into the tank. Conversely, when the float reaches the top limit position, the lever mechanism connected to it pushes the plug element into the closed position.

Known float valves feature a device for adjusting the closing force of the plug element according to the water mains pressure, which varies from one place to another. A high mains pressure demands a high closing force of the plug element to prevent annoying leakage when the float valve is closed, whereas, in the case of a low mains pressure, the closing force is reduced accordingly to prevent excessive wear and deformation (and so increase the working life) of the plug element, while at the same time ensuring effective closure of the valve when the water reaches the desired level.

Known adjusting devices normally comprise a screw-nut screw coupling either on or directly connected to the movable slide to adjust the position of the slide with respect to the elongated body. As the coupling, however, is not easily accessible by the necessary tools, such devices fail to provide for adjusting the closing force once the valve is assembled. At present, therefore, the valve is set, prior to assembly, to an approximate and not always optimum closing force, and must be dismantled if the setting proves wrong.

It is an object of the present invention to provide a water supply float valve designed to overcome the aforementioned drawback, and which in particular provides for troublefree adjustment of the closing force.

According to the present invention, there is provided a float valve for feeding water into a lavatory flush tank, and comprising a valve body defining at least one conduit having an on-off portion, said valve body housing an axially-movable plug element; a float movable vertically according to the water level in said tank; and a lever control mechanism interposed between said float and said plug element to move said plug element towards and away from said on-off portion of said conduit as said float moves between a first and a second limit position; characterized in that said lever control mechanism comprises a first and a second lever connected to each other by adjusting means for adjusting the mutual angular position of said first and second lever.

A preferred, non-limiting embodiment of the present invention will be described by way of example with reference to the accompanying drawings, in which:
Figure 1 shows a section of a water supply float valve in accordance with the present invention, and in the closed position with a first closing force setting;
Figure 2 shows a cross section along line II-II in Figure 1;
Figure 3 shows a section similar to Figure 1, with the valve in the open position;
Figure 4 shows a section, with parts removed for clarity, along line IV-IV of the Figure 3 valve;
Figure 5 shows the Figure 1 valve in the closed position with a second closing force setting;
Figure 6 shows the Figure 5 valve in the open position.

In the drawings, number 1 indicates a cup-shaped lavatory flush tank housing a float valve 2 for feeding water into tank 1. Tank 1 also houses in known manner a discharge valve (not shown) for discharging water from the tank into a lavatory (not shown); and a control assembly (not shown) for controlling the discharge valve.

Valve 2 comprises an elongated body 3 having a tubular portion 4 and a hollow portion 5. Tubular portion 4 has an end 6 connected in known manner either directly or by means of a conduit (not shown) to a lateral wall 7 of tank 1, and defines internally a first axial conduit 8 having a first end 8a for receiving water from the mains (as shown by arrow 9) through a filter 10, and a second end 8b facing a circular chamber 11.

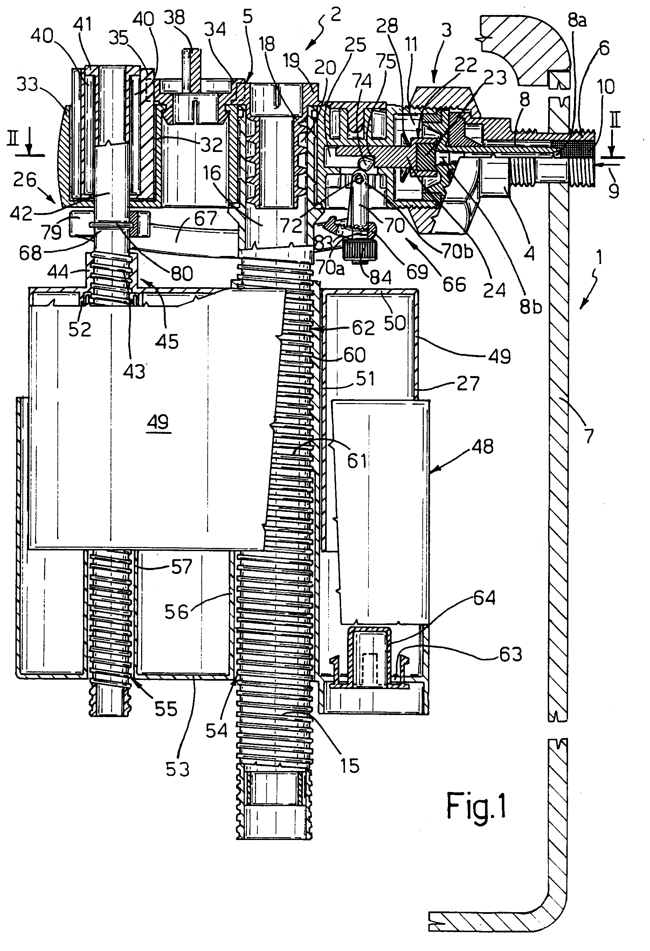

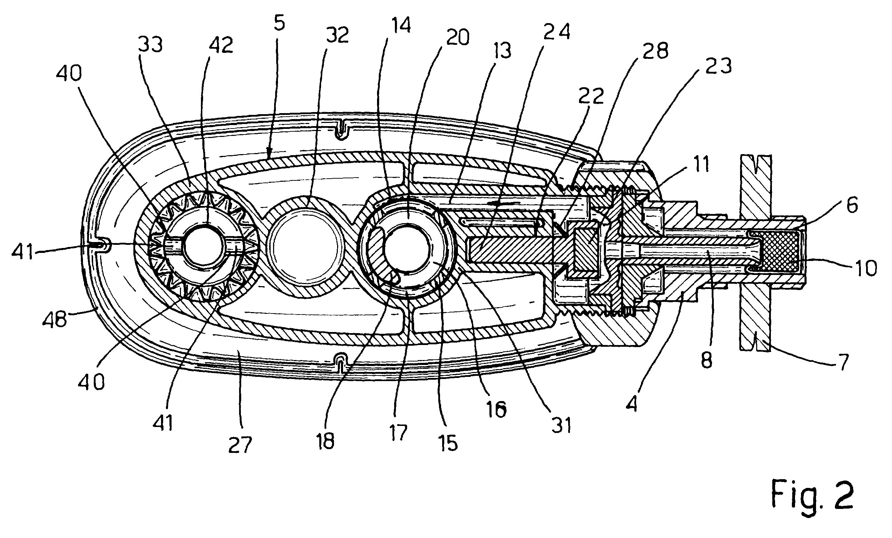

Circular chamber 11 communicates (Figure 2) with a second conduit 13 substantially parallel to first conduit 8 and terminating at an annular chamber 14 formed outside an open-bottomed water supply tube 15 carried by hollow portion 5 as described in detail later on. Annular chamber 14 is connected to the inner cavity 16 of supply tube 15 via through holes 17 to allow water from the mains to flow into tank 1. With reference to Figure 1, a hub 18 of a gear 19 extends inside cavity 16, at the top of supply tube 15, is connected integrally to supply tube 15, has an outside diameter approximately equal to but no larger than the diameter of cavity 16, and comprises a spiral groove 20 formed on the outer surface of hub 18 to guide, in use, a stream of water along a spiral path tangent to the inner surface of supply tube 15.

Elongated body 3 houses a plug element 22 coaxial with conduit 8 and comprising a head 23 made of elastomeric material and which rests against and closes end 8b of conduit 8 once tank 1 is full, and a shank 24 housed inside a guide seat 25 formed by tubular portion 4 to permit axial displacement of plug element 22. Shank 24 of plug element 22 is fitted with a Belleville washer 28, and cup element 22 is controlled by a lever mechanism 26 connected to a float 27 as described in detail later on.

Hollow portion 5 of elongated body 3 defines three parallel, side by side tubular bodies 31, 32, 33. More specifically, tubular body 31 houses in rotary manner the top portion of supply tube 15, and supports the bottom of gear 19; tubular body 32 houses in rotary manner the bottom hub 34a of a second gear 34 meshing with gear 19; and tubular body 33 houses in rotary manner a hollow third gear 35 extending along the whole of tubular body 33, and having a top portion projecting from tubular body 33 and meshing with second gear 34. Second gear 34 has a central axial projection 38 defining a knob by which to adjust the water level, as explained in detail later on.

Third gear 35 defines internally a pair of parallel, diametrically-opposed axial grooves 40 engaged by two corresponding diametrically-opposed tabs 41 carried by a guide rod 42, which is housed partially inside third gear 35 and projects from the bottom of third gear 35 and hollow portion 5 of elongated body 3. The bottom half of rod 42 has an externally threaded portion 43 cooperating with a nut screw portion 44 formed on float 27 and defining, with portion 43, a screw-nut screw assembly 45.

Float 27 is defined by an open-bottomed hollow shaped body housed loosely inside a tank 48 substantially complementary in shape to that of float 27.

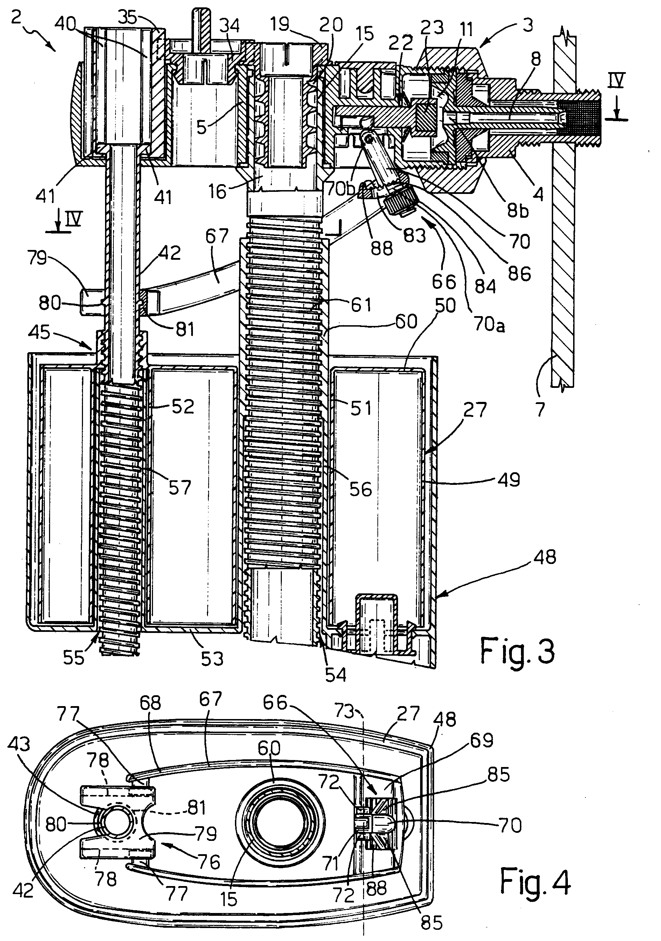

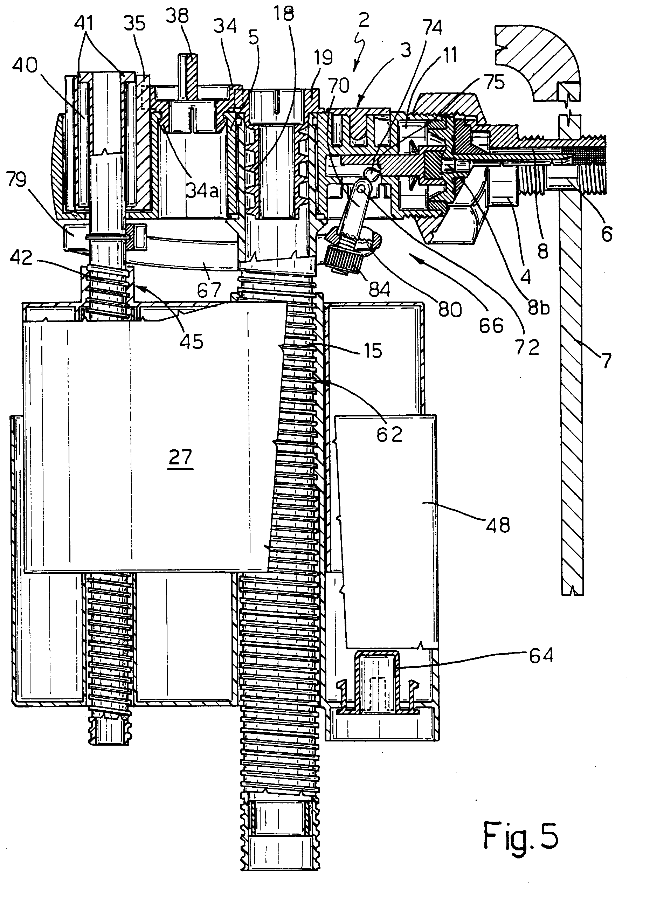

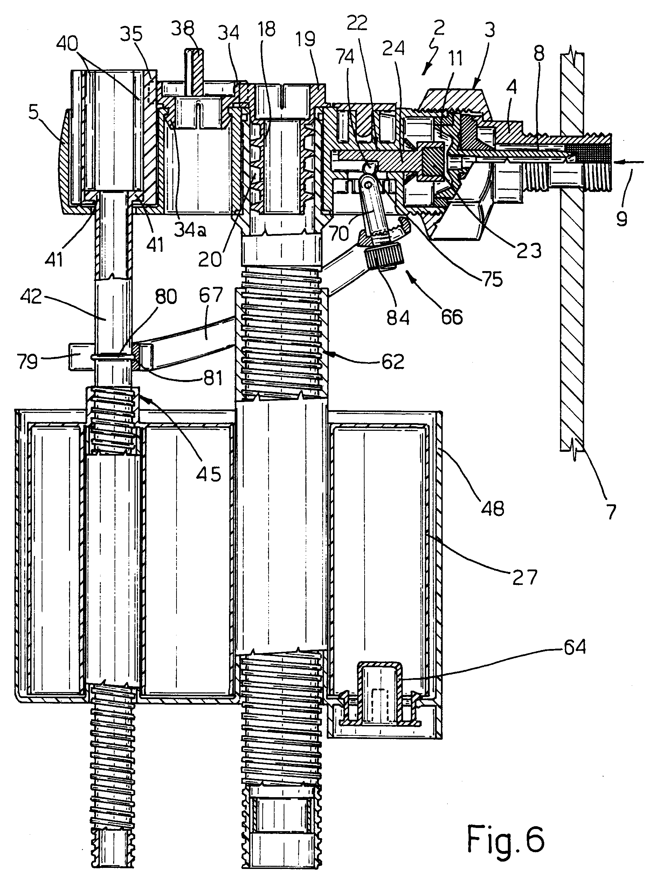

Float 27 is movable, with respect to tank 48, between a lowered position (Figures 3 and 6) in which float 27 is fully inserted inside tank 48, and a raised position (Figures 1 and 5) in which float 27 projects partially from a top edge of tank 48.

More specifically, float 27 comprises a lateral wall 49; a top end wall 50; and two tubular portions 51, 52 connected integrally to end wall 50 and extending downwards coaxially with supply tube 15 and guide rod 42 respectively (Figures 3 and 6).

Tank 48 comprises a bottom wall 53 having two openings 54, 55 coaxial respectively with supply tube 15 and guide rod 42. Tank 48 also comprises two inner tubular portions 56, 57 extending upwards from bottom wall 53 and respectively surrounding openings 54, 55. More specifically, tubular portion 52 of float 27 is connected telescopically to tubular portion 57 of tank 48, which surrounds and is connected to threaded portion 43 of guide rod 42 by means of assembly 45; and tubular portion 51 of float 27 is connected telescopically to tubular portion 56 of tank 48, which surrounds part of supply tube 15. A top end portion 60 of tubular portion 56 is threaded internally and mates with an externally threaded portion 61 of supply tube 15 to form a screw-nut screw coupling 62.

Bottom wall 53 of tank 48 has a further opening 63 adjacent to opening 54 and engaged by a known valve 64 (not described in detail) which, in use, is maintained closed by the water in tank 1.

Lever mechanism 26 comprises a fork lever 67 (Figure 4), a first end portion 68 of which is connected to an intermediate portion of guide rod 42 so as to move, together with rod 42, between a raised position corresponding to the closed position of plug element 22 (Figures 1 and 5), and a lowered position corresponding to the open position of plug element 22 (Figures 3 and 6). At the opposite end to first end portion 68, fork lever 67 also has a second end portion 69 secured to an end portion 70a of a transmission lever 70 by means of a toothed coupling 66 permitting adjustment of the angle formed between levers 67 and 70, and for making the two levers integral with each other after adjustment and, in particular, during operation of float valve 2. At the opposite end to end portion 70a connected to fork lever 67, transmission lever 70, which is defined by a pin, comprises an end portion 70b having a pair of opposite hinge pins 72, which engage respective holes (not shown) formed by hollow portion 5 of elongated body 3 to permit rotation of transmission lever 70 about an axis 73 perpendicular to shank 24 of plug element 22.

End portion 70b of transmission lever 70 is connected to shank 24 of plug element 22 by a cam device comprising a tear-shaped cam 74, which is connected integrally to end portion 70b, projects from end portion 70b eccentrically with respect to transmission lever 70, and rests against a bottom axial shoulder 75 formed on shank 24.

End portion 68 of fork lever 67 is connected to guide rod 42 by a sliding hinged coupling 76 comprising two guide pins 77 projecting towards each other from end portion 68 and engaging respective lateral guide grooves 78 of a substantially U-shaped elastic element 79 (Figure 4). Elastic element 79 is snapped on to guide rod 42 by a peripheral rib 80 on guide rod 42 engaging a corresponding groove 81 on elastic element 79, so that end portion 68 of fork lever 67 remains integral, heightwise, with guide rod 42 as float 27 moves down and then back up to respectively empty and refill tank 1.

End portion 69 of fork lever 67 (Figures 3 and 4) comprises a transverse through slot 83 fitted through with end portion 70a of transmission lever 70, which end portion 70a is threaded and engaged by a ring nut 84. Transmission lever 70 also comprises, on opposite sides, a pair of triangular wings 85 (Figure 4), the bottom side, facing end portion 69 of fork lever 67, of each of which is defined by a toothed surface 86 defined by a number of teeth parallel to one another and to the axis 73 of rotation of transmission lever 70. Toothed surfaces 86 engage respective toothed portions 88 formed on end portion 69 of fork lever 67; and toothed portions 88 extend further than respective toothed surfaces 86 in a direction perpendicular to the teeth, so as to define a number of mutual engagement positions corresponding to respective angular positions of transmission lever 70 with respect to fork lever 67.

Float valve 2 as described operates as follows. Under normal conditions, when tank 1 is at rest, tank 1 is filled with water; float 27 is in the raised position (Figures 1 and 5), so that fork lever 67 is substantially horizontal; and transmission lever 70 is so rotated that cam 74 pushes against shoulder 75 of plug element 22 to keep head 23 pressed against end 8b to close conduit 8. When the pushbutton (not shown) controlling tank 1 is operated, the water inside tank 1 flows out through a hole (not shown) in the bottom of tank 1, which is thus emptied. As the water level falls, float 27 moves into the bottom limit position fully inserted inside tank 48 (Figures 3 and 6). The downward movement of float 27 rotates fork lever 67 and transmission lever 70 anticlockwise about axis 73, by virtue of coupling 76 between end portion 68 of the fork lever and guide rod 42, screw-nut screw assembly 45 between guide rod 42 and float 27, and toothed coupling 66 between fork lever 67 and transmission lever 70; and the rotation of transmission lever 70 in turn rotates cam 74, which no longer presses against shoulder 75 of plug element 22. The pressure of the water from the mains therefore moves plug element 22 axially away from end 8b of conduit 8, so that water flows freely into chamber 11, along conduit 13, into chamber 14, into cavity 16 of supply tube 15, and finally into tank 1.

When the water level rises over the top end of tank 48, water flows into the gap between tank 48 and float 27, so that the float, due to the air trapped inside it, gradually moves upwards. As a result, guide rod 42 moves upwards; pins 77 slide and are oriented along respective grooves 78; fork lever 67 and transmission lever 70 are rotated clockwise about axis 73; and cam 74 gradually pushes plug element 22 towards end 8b of conduit 8 to close the end completely and once more cut off the inflow of water.

As stated, by adjusting the mutual angular position of levers 67 and 70, toothed coupling 66 provides for adjusting the closing force exerted by plug element 22 on end 8b of conduit 8. More specifically, by even only partially unscrewing ring nut 84 on threaded end portion 70a of transmission lever 70, toothed portions 88 of end portion 69 of fork lever 67 may be detached from respective toothed surfaces 86 of wings 85 of transmission lever 70 to position wings 85 differently with respect to toothed portions 88. Once the adjustment is made, ring nut 84 is simply tightened to lock levers 67 and 70 in the new position with respect to each other. Figures 1 and 5 show two limit positions of transmission lever 70 with respect to fork lever 67, with float valve 2 in the closed position; and Figures 3 and 6 show the corresponding positions with valve 2 in the open position. As can be seen, particularly in Figures 1 and 5, the two different settings provide for different pressures being exerted by plug element 22 (that is, by head 23). In Figure 5, in which the inner angle between the two levers is greater than in Figure 1, the greater rotation and the tear shape of cam 74 and the deformability of head 23 provide for exerting greater pressure to ensure effective sealing even in the presence of a very high mains pressure. For medium mains pressures, levers 67 and 70 may be set to an intermediate position. As will be clear to an expert in the field, the above adjustment is extremely straightforward, and may even be made once valve 2 is assembled.

The float valve according to the present invention also provides for easily adjusting the water level inside tank 1, and therefore the amount of water discharged, by means of gears 19, 34, 35. More specifically, by adjusting gear 34 by means of projection 38, the coupling 62 between tank 48 and supply tube 15 provides for adjusting the height of tank 48 and, in particular, the position of the top end of tank 48 with respect to the bottom of tank 1. Rotation of gear 34 simultaneously rotates gear 35 and, via screw-nut screw assembly 45, accordingly adjusts the height of float 27. Using gears 19, 35 of the same diameter, or by selecting an appropriate transmission ratio between these and gear 34, and an appropriate pitch of the screw-nut screw couplings, float 27 may be adjusted synchronously with, and by the same amount as, tank 48. As is known, adjusting the height of float 27 and tank 48 adjusts the bottom limit position of the float and therefore the water level at which water begins flowing into tank 48 when filling tank 1. And as the travel of guide rod 42 is fixed, the top limit position of the float, i.e. the water level at which float valve 2 is fully closed, is also adjusted.

Clearly, changes may be made to the float valve as described and illustrated herein without, however, departing from the scope of the present invention.

## Claims

1. A float valve (2) for feeding water into a lavatory flush tank (1), and comprising a valve body (3) defining at least one conduit (8) having an on-off portion (8b), said valve body (3) housing an axially-movable plug element (22); a float (27) movable vertically according to the water level in said tank (1); and a lever control mechanism (26) interposed between said float (27) and said plug element (22) to move said plug element towards and away from said on-off portion (8b) of said conduit (8) as said float (27) moves between a first and a second limit position; characterized in that said lever control mechanism (26) comprises a first (67) and a second (70) lever connected to each other by adjusting means (66) for adjusting the mutual angular position of said first and second lever.

2. A valve as claimed in Claim 1, characterized in that said adjusting means (66) comprise complementary shaped surfaces (88, 86) formed on facing portions (69, 85) of said first and second lever (67, 70), said shaped surfaces being settable to different mutual positions; and in that said first and second lever (67, 70) comprise mutual locking means (66) for locking said surfaces in one of said different mutual positions.

3. A valve as claimed in Claim 2, characterized in that said shaped surfaces comprise toothed surfaces (88, 86); and said locking means (66) comprise a slot (83) formed in said first lever (67), and a threaded portion (70b) formed on said second lever (70); said threaded portion extending through said slot, and being engaged by a lock nut (84) located on the opposite side of said shaped surfaces to said second lever.

4. A valve as claimed in any one of the foregoing Claims, characterized in that said second lever (70) has one end (70b) hinged to said valve body (3) and fitted integrally with a cam element (74) acting on said plug element (22).

5. A valve as claimed in Claim 4, characterized in that said cam element (74) is tear-shaped and acts on a shoulder (75) of said plug element (22).

6. A valve as claimed in Claim 5, characterized in that said cam element (74) is eccentric with respect to said second lever (70).

7. A valve as claimed in any one of the foregoing Claims, characterized by comprising regulating means (19, 34, 35, 45, 62) for regulating said limit positions of said float.

8. A valve as claimed in Claim 6, characterized in that said first lever (67) is connected to said float (27) by a guide rod (42) connected to said float by first screw and nut screw means (45); in that a top end of said guide rod is carried in rotary manner by said valve body (3); and in that said float (27) is connected to said valve body in sliding and angularly-fixed manner.

9. A valve as claimed in Claim 7, characterized in that said valve body (3) carries a supply tube (15) connected to said conduit (8) when said plug element (22) is detached from said on-off portion (8b) of said conduit; said supply tube (15) being connected by means of second screw and nut screw means (62) to a float tank (48) at least partially housing said float; and in that said supply tube is connected to said top end of said guide rod (42) by a gear (19, 34, 35) having external actuating means (38).
